# EUROPÄISCHE PATENTSCHRIFT

(11) **EP 4 480 750 B1**
(45) Veröffentlichungstag und Bekanntmachung des Hinweises auf die Patenterteilung: **22.10.2025**
(21) Anmeldenummer: 23180442.8
(22) Anmeldetag: 20.06.2023
(51) Int. Cl.: B60P 3/34, F16G 13/20

(54) **FAHRZEUG UND SLIDE-OUT-ANORDNUNG DAFÜR**
VEHICLE AND SLIDE-OUT ASSEMBLY THEREFOR
VÉHICULE ET SON ENSEMBLE DE SORTIE DE SIDE

(43) Veröffentlichungstag der Anmeldung: 25.12.2024
(73) Patentinhaber: XKuub B.V., 2153 GE Nieuw-Vennep (NL)
(72) Erfinder: Blom, Petrus Hendricus Maria, 2153GE Nieuw-Vennep (NL); Helmling, Markus Johannes, 89160 Dornstadt (DE)
(74) Vertreter: Witte, Weller und Partner Patentanwälte mbB Stuttgart

(56) Entgegenhaltungen:
- US-A- 4 295 679
- US-A1- 2014 259 609
- US-A1- 2016 243 973
- US-B1- 7 717 485
- US-B2- 8 069 954

## Beschreibung

### ANWENDUNGSGEBIET UND STAND DER TECHNIK

Die Erfindung betrifft das Gebiet von Slide-Out-Kästen für Fahrzeuge. Slide-Out-Kästen sind Erweiterungen für den Innenraum eines Fahrzeugs, die in einer Slide-Out-Aussparung einer Fahrzeugwand positioniert sind und zwischen einer eingefahrenen Stau-Endlage und einer ausgefahrenen Nutz-Endlage verfahrbar sind. Die ausgefahrene Nutz-Endlage führt dazu, dass der Innenraum des Fahrzeugs in etwa um die Größe des Slide-Out-Kastens vergrößert ist. Dies kann beispielsweise bei stationärer Verwendung des Fahrzeugs genutzt werden, um den Wohnraum eines Reisemobils zu vergrößern.

Das Verfahren des Slide-Out-Kastens zwischen der Stau-Endlage und der Nutz-Endlage erfolgt bei bekannten Slide-Out-Systemen in der Regel motorisch.

Zu diesem Zweck ist ein Antriebssystem vorgesehen, welches beispielsweise über eine Scherenmechanik den Slide-Out-Kasten zum Zwecke der Überführung in die Nutz-Endlage nach außen drückt und zur Überführung in die Stau-Endlage nach innen drückt. Das Dokument US 2003/0080576 A1 zeigt eine solche Scherenmechanik. Eine Scherenmechanik ist jedoch üblicherweise recht schwer und reduziert dadurch die zusätzliche Zuladung des Fahrzeuges.

Andere Formen von Antriebssystemen für Slide-Out-Anordnungen nutzen Ketten als Antrieb. So ist beispielsweise aus der US 8,091,940 B1 ein Slide-Out-System bekannt, bei dem die Verlagerung des Slide-Out-Kastens über Schubketten erfolgt. Schubketten verlangen jedoch üblicherweise eine Führung, die die Abdichtung eines Fahrzeuginnenraums gegenüber einer Umgebung erschweren. Die wärmedichte Abdichtung des Slide-Out-Kastens ist technisch daher häufig nicht optimal gelöst. Ein ähnliches Problem besteht auch bei bekannten Systemen, bei denen an der Außenseite des Slide-Out-Kastens Zahnstangen als Teil des Antriebssystems vorgesehen ist.

Neben dem bereits genannten Gewicht und der problematischen Abdichtung der genannten Antriebssysteme ist bei bekannten Antriebssystemen nicht immer eine ästhetische positive Anmutung gewährleistet, da das Antriebssystem je nach Ausgestaltung im ausgefahrenen Zustand des Slide-Out-Kastens zum Teil von innen oder außen sichtbar bleibt.

Auch aus dem Dokument US 7,717,485 B1 ist ein Slide-Out-System mit Schubketten bekannt.

Aus den Dokumenten US 8,069,954 B2 und US 2014/0259609 A1 sind Schubkettensystem für verschiedene Zwecke bekannt, bei denen Kettenglieder mehrerer Einzelketten im Zuge des Ausfahrens in Kontakt miteinander gelangen und beim fortgesetzten Ausfahren als gemeinsamer Kettenstrang ausgefahren werden.

### AUFGABE UND LÖSUNG

Aufgabe der Erfindung ist es, eine Slide-Out-Anordnung mit einem Antriebssystem zur Verfügung zu stellen, welche die genannten Nachteile der Systeme des Standes der Technik überwindet oder vermindert.

Zur Lösung der Aufgabe wird primär eine Slide-Out-Anordnung für ein Fahrzeug vorgeschlagen. Die Slide-Out-Anordnung umfasst die mechanischen Komponenten für die Integration eines Slide-Out-Kastens in ein Fahrzeug, wobei der Slide-Out-Kasten selbst nicht Teil der Slide-Out-Anordnung sein muss. Der Slide-Out-Kasten kann jedoch auch als Teil der Slide-Out-Anordnung angesehen werden und gemeinsam mit den im Weiteren beschriebenen Komponenten der Slide-Out-Anordnung ein Gesamtprodukt bilden.

Soweit im Weiteren auf die Anbringung Komponenten am Slide-Out-Kasten oder am Fahrzeugchassis Bezug genommen wird, ist dies derart zu verstehen, dass diese Komponenten für die entsprechende Anbringung und Zusammenwirkung im angebrachten Zustand ausgebildet sind.

Die erfindungsgemäße Slide-Out-Anordnung umfasst eine fahrzeugseitige Baugruppe zur Anbringung am Chassis eines Fahrzeugs sowie eine slide-out-seitige Baugruppe zur Anbringung am Slide-Out-Kasten. Die jeweiligen Baugruppen verfügen üblicherweise über ein Beschlagselement oder mehrere Beschlagselemente, die am Fahrzeugchassis bzw. dem Slide-Out-Kasten befestigt werden, insbesondere dort verschraubt werden.

Weiterhin verfügt die Slide-Out-Anordnung vorzugsweise über eine Führungseinrichtung, mittels derer die fahrzeugseitige Baugruppe und die slide-out-seitige Baugruppe gegeneinander geführt verlagerbar sind. Insbesondere kann die Führungseinrichtung eine kastenseitige Bodenfläche verwenden, an der Führungsmittel wie Rollen oder korrespondierende Schienen angebracht werden können, wobei die Bodenfläche jedoch vorzugsweise nur als Abrollfläche für chassisseitige Rollen verwendet wird. Wenngleich grundsätzlich für den Betrieb des Slide-Outs eine Führungseinrichtung zweckmäßig ist, muss diese nicht Teil der erfindungsgemäßen Slide-Out-Anordnung sein, sondern kann hiervon getrennt realisiert sein.

Eine erfindungsgemäße Slide-Out-Anordnung zeichnet sich insbesondere über ihr Antriebssystem aus, mittels dessen die fahrzeugseitige Baugruppe und die slide-out-seitige Baugruppe gegeneinander verfahrbar sind. Das Antriebssystem ist dafür vorgesehen, bidirektional eine Verfahrkraft auf den Slide-Out-Kasten auszuüben, um diesen auszufahren und einzufahren. Beim Ausfahren des Slide-Out-Kastens fährt dieser partiell aus dem Innenraum des Fahrzeugs heraus nach außen und vergrößert damit den Innenraum. Beim Einfahren des Slide-Out-Kastens bewegt sich der Slide-Out-Kasten in entgegengesetzte Richtung nach innen bis in eine Stau-Endlage, in der das Fahrzeug bewegt werden kann.

Das Antriebssystem umfasst erfindungsgemäß einen Schubkettenantrieb. Die zwischen der fahrzeugseitigen und der slide-out-seitigen Baugruppe für das Verfahren erforderliche Kraft wird also durch einen Kettensatz bereitgestellt, der zur Übertragung von Schubkräften ausgebildet ist. Der Schubkettenantrieb umfasst zu diesem Zweck einen Doppelkettensatz. Dieser Doppelkettensatz verfügt über mindestens zwei unabhängig voneinander beim Ausfahren des Doppelkettensatzes zu einem Kontaktbereich zugeführten Kettenstränge.

Diese mindestens zwei Kettenstränge sind vorzugsweise jeweils als unidirektional knickbewegliche Kettenstränge ausgebildet. Unter einem unidirektional knickbeweglichen Kettenstrang im Sinne der Erfindung wird ein Kettenstrang verstanden, der ausgehend von einer linear ausgerichteten Erstreckung aufgrund der Formgebung der Kettenglieder nur ein Einknicken in eine Richtung gestattet, ein Einknicken in entgegengesetzte Richtung jedoch zumindest weitgehend unterbindet. Wird die Kette mit einer Kraft in diese gesperrte Richtung beaufschlagt, so gelangen die Kettenglieder in bewegungslimitierende Anlage aneinander und verhindern ein Einknicken in dieser gesperrten Richtung.

Die mindestens zwei Kettenstränge gelangen beim Ausfahren der Kettenstränge im Kontaktbereich derart in Kontakt miteinander, dass sie sich gegenseitig stützend oder haltend als Kettenverbund ausfahrbarsind. Ihre Knickbeweglichinnere Beweglichkeit wird hierbei aufgehoben. Im Falle von unidirektional knickbeweglichen Kettensträngen weicht die Knickbeweglichkeit beider Kettenstränge voneinander ab, so dass der Kettenverbund der Beweglichkeit quer zur Ausfahrrichtung beraubt ist.

Ab dem Kontaktbereich werden die Kettenstränge als Kettenverbund in eine gemeinsame Richtung ausgefahren. Ein Ausweichen der Kettenstränge ist dabei nicht in relevantem Maße möglich, da die Kettenstränge im Verbund ihre isolierte Knickbeweglichkeit einbüßen, weil Kettenglieder beider Kettenstränge formschlüssig miteinander verbunden werden und/oder weil die Kettenstränge jeweils aufgrund unidirektionaler Knickbeweglichkeit dem Ausknicken des jeweils Kettenstrangs anderen entgegenstehen. Der Kettenverbund ist zur Übertragung von Druckkräften geeignet und kann in der gewünschten Weise einen Slide-Out-Kasten verlagern.

Wenngleich es als bevorzugt angesehen wird, wenn der Doppelkettensatz durch genau zwei Kettenstränge gebildet wird, sind hiervon abweichend auch Gestaltungen mit mehr Kettensträngen möglich, beispielsweise mit drei oder vier Kettensträngen. Der Begriff des "Doppelkettensatzes" ist nur aufgrund der bevorzugten Bauweise mit zwei sich gegenseitig stützenden oder haltenden Kettensträngen gewählt, umfasst jedoch auch Gestaltungen mit mehr als zwei sich gegenseitig stützenden oder haltenden Kettensträngen. Soweit im Weiteren gemeinschaftlich auf die zwei Kettenstränge des Doppelkettensatzes Bezug genommen wird, sind auch die Kettenstränge eines Kettensatzes mit drei oder mehr Kettensträngen gemeint.

Die Verwendung nur eines Doppelkettensatzes zum Ausfahren und Einfahren des Slide-Out-Kastens ist grundsätzlich möglich. Bevorzugt wird dagegen die Verwendung mehrerer Doppelkettensätze, die jeweils mindestens zwei Kettenstränge umfassen. Insbesondere vorzugsweise sind mindestens zwei Doppelkettensätze vorgesehen, die symmetrisch linksseitig und rechtsseitig den Slide-Out-Kasten antreiben. Es kann dabei auch vorgesehen sein, dass je Seite mehr als ein Doppelkettensatz vorgesehen ist, wobei insbesondere beidseitig des Doppelkettensatzes je zwei Doppelkettensätze und somit insgesamt vier Doppelkettensätze vorgesehen sind. Wie im Weiteren noch erläutert wird, ist im Falle von jeweils zwei Doppelkettensätzen je Seite vorzugsweise nur ein gemeinsamer Motor zum Ausfahren und Einfahren der beiden Doppelkettensätze vorgesehen.

Die im Kontaktbereich miteinander in Kontakt gelangenden Kettenglieder der beiden Kettenstränge eines Doppelkettensatzes können im mechanisch einfachsten Falle lediglich eine Kontaktfläche aufweisen, im Bereich derer sie jenseits des Kontaktbereichs aneinander anliegen, ohne dass spezielle Vorkehrungen getroffen sein müssen, um einer Relativverschiebung der Kettenstränge gegeneinander in Ausfahrrichtung des Kettenverbundes entgegenzuwirken.

Es ist allerdings bevorzugt, dass die beiden Kettenstränge dafür ausgebildet sind, im Kontaktbereich eine formschlüssige Kopplung miteinander einzugehen. Die Kettenstränge gehen bei einer solchen Gestaltung eine Verbindung ein, die die beiden Kettenstränge zumindest bezogen auf eine Ausfahrrichtung des Kettenverbundes formschlüssig koppelt, beispielsweise durch Verzahnungen an beiden Kettensträngen. Insbesondere können die Kettenstränge jedoch auch derart formschlüssig gekoppelt werden, dass sie jenseits des Kopplungsbereichs quer zur Ausfahrrichtung gegen Trennung voneinander gesichert sind. Insbesondere kann dies derart umgesetzt werden, dass zwei miteinander in Anlage gelangende Kettenglieder beider Kettenstränge mit mindestens einem Kopplungsfortsatz an einem der Kettenglieder und mindestens einer Kopplungsausnehmung am anderen Kettenglied versehen sind, wobei der Kopplungsfortsatz bei der Umlenkung in den Kopplungsbereich in die Kopplungsausnehmung einfährt und mit Durchfahren des Kopplungsbereichs in eine gekoppelte Stellung gebracht wird, die in der geradlinigen Erstreckung des somit gebildeten Kettenverbundes quer zu dessen Ausfahrrichtung nicht trennbar ist. Zu diesem Aspekt sowie zum Konzept der sich gegenseitig stützenden oder haltend Kettenstränge allgemein wird ergänzend auf das Dokument US 8069954 B2 verwiesen, aus dem sich eine entsprechende Kettengestaltung entnehmen lässt. Die dortige Offenbarung der Kettengestaltung wird per Bezugnahme zum Inhalt dieser Beschreibung gemacht.

Wie bereits beschrieben, dient die Slide-Out-Anordnung dem Ausfahren eines Slide-Out-Kastens, der Teil der Slide-Out-Anordnung sein kann, aber nicht muss, wenn diese als Set vermarktet wird. Der Slide-Out-Kasten weist zumindest eine formstabile Außenseite auf, insbesondere eine Blechwand. Diese Außenseite bildet eine Außenseite des Fahrzeugs, wenn der Slide-Out-Kasten eingefahren ist und ist dann im Wesentlichen fluchtend mit der jeweiligen Fahrzeugwand ausgerichtet, die die Slide-Out-Aussparung umgibt, in der der Slide-Out-Kasten beweglich geführt ist.

Der Slide-Out-Kasten verfügt weiterhin vorzugsweise über Seitenwandungen sowie eine deckenseitige Oberwandung und eine bodenseitige Unterwandung. Die Seitenwandungen und die Oberwandung und Unterwandung sind vorzugsweise ebenfalls formstabil und insbesondere vorzugsweise als Blechwandungen ausgestaltet. Sie können aber grundsätzlich auch formflexibel ausgebildet sein, beispielsweise in Art einer Balgwandung.

Eine übliche Grundform sieht vor, dass der Slide-Out-Kasten eine quaderförmige Grundform aufweist. Hierbei schließen die Seitenwandungen nicht nur mit der Außenseite, sondern auch mit der Oberwandung und der Unterwandung einen Winkel von 90 Grad ein.

Die erfindungsgemäße Slide-Out-Anordnung gestattet jedoch darüber hinaus auch in vorteilhafter Weise eine Gestaltung des Slide-Out-Kastens mit sich nach oben verjüngender Formgebung. Dies bedeutet, dass die Seitenwandungen oben geringer als unten voneinander beabstandet sind. Umfasst sind sowohl Gestaltungen mit ebenen nach oben konvergierenden Seitenwandungen als auch komplexere Formen der Seitenwandungen, insbesondere dem Querschnitt eines sich nach oben verjüngenden Fahrzeugs folgend.

Besonders vorteilhaft ist dies bei Slide-Out-Anordnung, die zum heckseitigen Ausfahren und Einfahren eines Slide-Out-Kastens vorgesehen sind, wie im Weiteren noch näher erläutert wird. Insbesondere in einem solchen Fall ist eine sich nach oben verjüngende Gestalt des Slide-Out-Kastens vorteilhaft.

Wie eingangs bereits erläutert, ist erfindungsgemäß vorgesehen, dass das Antriebssystem mindestens einen Doppelkettensatz aufweist, der aus mindestens zwei Kettensträngen gebildet ist, die beim Ausfahren des als Schubkette wirkenden Doppelkettensatzes sich gegenseitig halten und einen Kettenverbund bilden. Dieser Kettenverbund überträgt beim Ausfahren eine Druckkraft und beim Einfahren eine Zugkraft, mittels derer der Abstand der slide-out-seitigen Baugruppe und der fahrzeugseitigen Baugruppe vergrößert und verkleinert wird und damit das Ausfahren und Einfahren des Slide-Out-Kastens bewirkt wird. Zum Zwecke der Kraftübertragung ist das freie Ende des Kettenverbundes fest an der slide-out-seitigen Baugruppe oder fest an der der fahrzeugseitigen Baugruppe angebracht. An der jeweils anderen Baugruppe sind ein im Weiteren noch beschriebener Kettenspeicher sowie vorzugsweise ein Antriebsmotor angebracht.

Insbesondere ist es bevorzugt, dass das Antriebssystem derart ausgebildet und der Doppelkettensatz derart daran vorgesehen ist, dass durch Ausfahren des Doppelkettensatzes der Slide-Out-Kasten eingefahren wird und durch Einfahren des Doppelkettensatzes der Slide-Out-Kasten ausgefahren wird. Dies bedeutet, dass die slide-out-seitige und die fahrzeugseitige Baugruppe derart am Chassis bzw. am Slide-Out-Kasten vorgesehen sind, dass eine Vergrößerung ihres Abstandes ein Einfahren des Slide-Out-Kastens bewirkt. Insbesondere kann hierbei das freie Ende des Kettenverbundes in Richtung des Fahrzeuginnenraum weisend an derslide-out-seitigen Baugruppe befestigt sein, beispielsweise an einem innenseitigen Ende, insbesondere an einer umlaufenden Blende des Slide-Out-Kastens, während der Kettenspeicher innenseitig an der Fahrzeugwand angebracht ist.

Das Antriebssystem und insbesondere der mindestens eine Doppelkettensatz können hierdurch im Innenbereich des Fahrzeugs und insbesondere in einem Trockenbereich angeordnet sein. Vorzugsweise weist die Slide-Out-Anordnung eine Dichteinrichtung auf, die einen Fahrzeuginnenraum von einer Außenumgebung isoliert. Der mindestens eine Doppelkettensatz kann bei geeigneter Anordnung stets innerhalb des Fahrzeuginnenraums angeordnet sein.

Die einfachste Relativanordnung der beiden Kettenstränge sieht vor, dass diese die gleiche oder parallele Kettenebenen aufweisen. Im Kontext der Erfindung wird als Kettenebene eines Kettenstrangs jene Ebene verstanden, in der der Kettenstrang durch seine Knickbeweglichkeit beweglich ist. Die Kettenstränge werden bei der genannten einfachen Gestaltung aus entgegengesetzten Richtungen, jedoch in derselben oder parallelen Kettenebenen, in den Kontaktbereich beführt und zur Bildung des Kettenverbundes in eine ab hier gemeinsame Ausfahrrichtung zueinander gegenläufig eingeknickt.

Eine besondere Form der Relativanordnung der Kettenstränge weicht hiervon ab, indem die mindestens zwei Kettenstränge in unterschiedlichen Kettenebenen zugeführt werden. Die Kettenebenen stehen dabei vorzugsweise in einem Winkel von 60° bis 120° zueinander, insbesondere vorzugsweise in einem rechten Winkel. Die Kettenglieder der beiden Kettenstränge sind in diesem Falle dafür ausgebildet, in dem entsprechenden Winkel eine stützende oder haltende Wirkung aufeinander auszuüben. Insbesondere können die Kettenglieder hierfür mit angewinkelten Kontaktflächen ausgebildet sein und formschlüssig wirkende Kopplungsstrukturen aufweisen, die an die angewinkelte Zuführung angepasst sind.

Wird der Doppelkettensatz eingefahren, so trennen sich die mindestens zwei Kettenstränge im Kontaktbereich voneinander und fahren in einen Kettenspeicher ein. Der Kettenspeicher weist eine Aufnahmestruktur für jeden der zwei Kettenstränge auf, die den jeweiligen Kettenstrang beim Einfahren führt. Die Kettenspeicher der mindestens zwei Kettenstränge können durch ein gemeinsames Kettenspeichergehäuse gebildet sein.

Der Kettenspeicher ist vorzugsweise Teil der fahrzeugseitigen Baugruppe. Er wird also ebenso wie ein vorzugsweise in unmittelbarer Nähe zum Kettenspeicher angeordneter Antriebsmotor nicht gemeinsam mit dem Slide-Out-Kasten verfahren, sondern ist chassisseitig verbaut. Dies ermöglicht eine einfachere Montage.

Wie eingangs erwähnt, weist eine erfindungsgemäße Slide-Out-Anord nung vorzugsweise eine Mehrzahl von Doppelkettensätzen auf, mittels derer an unterschiedlichen Stellen des Slide-Out-Kastens eine in Einfahrrichtung bzw. Ausfahrrichtung des Slide-Out-Kastens wirkende Kraft eingekoppelt wird. Insbesondere sind vorzugsweise im Bereich beider Seitenwandungen jeweils ein Doppelkettensatz oder jeweils zwei Doppelkettensätze vorgesehen. Alternativ hierzu oder zusätzlich können auch die Unterwandung und/oder die Oberwandung mit einem Doppelkettensatz zum Zwecke des Antriebs versehen sein.

Insbesondere vorzugsweise sind mindestens zwei Doppelkettensätze der Slide-Out-Anordnung miteinander mechanisch synchronisiert. Solche synchronisierten Doppelkettensätze sind mit einer mechanischen Kopplung versehen, so dass sie stets gleichmäßig ausfahren. Insbesondere vorzugsweise können solche synchronisierten Doppelkettensätze mit einem gemeinsamen Motor betrieben werden, so dass nichtje Doppelkettensatz einen eigenen Motor benötigt wird.

Die Synchronisierung kann über eine Verbindungswelle erfolgen, die Antriebselemente, insbesondere Zahnräder oder Schnecken, die mit einer Verzahnung, an der dem Doppelkettensatz im Eingriff stehen, miteinander koppelt. Im einfachsten Falle ist eine Verbindungswelle vorgesehen, die gleichzeitig die Antriebswellen zweier Doppelkettensätze bildet und zu diesem Zweck im Bereich beider Doppelkettensätze mit einem Zahnrad versehen ist. Der Antrieb über eine Schnecke ist möglich, wird aber üblicherweise nicht bevorzugt, da eine manuelle Verlagerung im Schadensfalle aufgrund der Selbsthemmung an der Schnecke erschwert ist.

Im Falle einer Gestaltung des Slide-Out mit einem Slide-Out-Kasten mit ebenen Seitenwandungen kann die genannte Verbindungswelle eine starre und vorzugsweise metallische Welle sein, die insbesondere in Fahrzeughochrichtung erstreckt ist und einen oberen und einen unteren Doppelkettensatz miteinander koppelt. Insbesondere vorzugsweise sind im Bereich beider Seitenwandungen jeweils ein oberer und ein unterer Doppelkettensatz derart mittels einer Verbindungswelle miteinander gekoppelt.

Aber auch bei komplexeren Formgebungen des Slide-Out-Kastens, bei der die Doppelkettensätze einer Seitenwandung nicht rein vertikal versetzt übereinander angeordnet sind, sondern trotz Anordnung an der gleichen Seitenwandung auch horizontal versetzt sind, ist das Vorsehen einer mechanischen Synchronisierung zweckmäßig. In einem solchen Falle kann die Verbindungswelle elastisch biegbar ausgebildet sein. Auch möglich ist es in solchen Fällen, eine Verbindungswelle mit einer Ausgleichswellenkupplung vorzusehen, mittels derer zwei Antriebswellen der zwei Doppelkettensätzen verbunden sind. So kann beispielsweise eine starre Verbindungswelle mit zwei Kardangelenken vorgesehen sein, die die beiden Antriebswellen verbindet und einen benötigten radialen Wellenversatz zwischen den Antriebswellen ermöglicht.

Die Kettenstränge eines jeden Doppelkettensatzes werden im jeweiligen Kontaktbereich zusammengeführt, um beim Ausfahren von dort gemeinsam als Kettenverbund ausgefahren zu werden. Der Antrieb, der vorzugsweise über einen Elektromotor, vor allem einen bürstenlosen Elektromotor (BLDC), oder einen Hydraulikmotor erfolgt, kann an verschiedenen Stellen vorgesehen sein. Eine Möglichkeit besteht darin, dass je Kettenstrang ein Zahnrad als mit dem Motor gekoppeltes Antriebselement im Eingriff mit dem jeweiligen Kettenstrang steht. Im Falle von Kettensträngen, deren Kettenglieder für eine formschlüssige Kopplung ausgebildet sind, kann auch darauf verzichtet werden, beide Kettenstränge mit einem separaten Antriebselement anzutreiben und stattdessen kann das Antreiben nur eines Kettenstrangs ausreichen, welcher dann mittelbar auch den anderen Kettenstrang antreibt.

Besonders bevorzugt ist eine Gestaltung, bei der das Antriebselement im Kontaktbereich oder bezogen auf eine Ausfahrrichtung des Doppelkettensatzes jenseits des Kontaktbereichs im Eingriff mit dem Doppelkettensatz steht.

Weiterhin wird es besonders bevorzugt, wenn der Doppelkettensatz, insbesondere beide Kettenstränge des Doppelkettensatzes oder einer der Kettenstränge, eine Verzahnung auf einer Seitenfläche aufweist, wobei die Seitenfläche zur Kettenebene des jeweiligen Kettenstrangs parallel ausgerichtet ist. Angetrieben wird der Doppelkettensatz in diesem Falle über ein mit der Verzahnung auf der Seitenfläche im Eingriff stehendes Antriebselement, insbesondere ein Zahnrad, welches um eine zur Ausfahrrichtung des Doppelkettensatzes orthogonal ausgerichtete Achse drehbar ist und von einem Motor, insbesondere einem Elektromotor mit Untersetzungsgetriebe, angetrieben wird.

Der Antrieb des Doppelkettensatzes über eine Verzahnung an einer Seitenfläche gestattet eine besonders kompakte Bauweise. Zudem ermöglicht diese Bauweise, mit nur einem Zahnrad bzw. mit zwei starr miteinander verbundenen Zahnrädern beide Kettenstränge unmittelbar anzutreiben. Dies wird erreicht, wenn auf den Seitenflächen der Kettenglieder beider Kettenstränge die Verzahnung vorgesehen ist und das Zahnrad oder die Zahnräder mit beiden Kettengliedern im Eingriff stehen.

Eine erfindungsgemäße Slide-Out-Anordnung verfügt vorzugsweise über eine Dichteinrichtung, die eine das Fahrzeug umgebende Außenumgebung und einen Fahrzeuginnenraum zumindest zeitweise voneinander trennt.

Insbesondere ist vorzugsweise vorgesehen, dass die Slide-Out-Anordnung eine Endlagendichtung mit einer Dichtlippe aufweist. Diese Dichtlippe ist dafür ausgebildet, in einer ausgefahrenen Endlage des Slide-Out-Kastens umlaufend einen Fahrzeuginnenraum gegenüber einer Slide-Out-Aussparung zu isolieren. Die Dichtlippe ist derart ausgerichtet, dass sie keine dauerhafte Isolierung zwischen Innenraum und Fahrzeugumgebung herstellt, sondern diese nur in ausgefahrener Endlage bewirkt. Die Dichtlippe kann chassisseitig oder am Slide-Out-Kasten vorgesehen sein und ist in Richtung einer gegenüberliegenden Anlagefläche ausgerichtet, der sie im Zuge des Ausfahrens des Slide-Out-Kastens bis zum Kontakt angenähert wird. Die Dichtlippe kann insbesondere an einer innenliegenden umgebenden Blende des Slide-Out-Kastens vorgesehen sein und hier als umlaufende Dichtung vorgesehen sein. Die Blende wird zusammen mit dem Slide-Out-Kasten ausgefahren und die an ihrvorgesehene Dichtlippe legt sich gegen Ende der Ausfahrbewegung des Slide-Out-Kastens von innen an eine die Slide-Out-Ausnehmung umgebende Wandung des Fahrzeugs an.

Von besonderem Vorteil ist es, wenn das Antriebssystem derart ausgebildet ist, dass der mindestens eine Doppelkettensatz in seiner ausgefahrenen Stellung in einem Zwischenbereich angeordnet ist, der durch die Dichtlippe der Endlagendichtung gegenüber dem Fahrzeuginnenraum isoliert ist. Die Dichtlippe und ggf. ein die Dichtlippe tragender umlaufender Steg erfüllen bei einer solchen Gestaltung eine Doppelfunktion. Neben der Gewährleistung des abgedichteten Zustandes im ausgefahrenen Zustand des Slide-Outs wird auch eine Sichtblende hierdurch zur Verfügung gestellt, die das Antriebssystem im ausgefahrenen Zustand kaschiert, so dass es aus dem Innenraum heraus nicht mehr sichtbar ist.

Die genannte Endlagendichtung ist nicht alternativlos und für den Fall einer Gestaltung mit oder ohne Endlagendichtung ist weiterhin vorzugsweise vorgesehen, dass zusätzlich eine weitere Dichtung vorgesehen ist. Vorzugsweise ist vorgesehen, dass die Slide-Out-Anordnung alternativ zur Endlagendichtung oder insbesondere zusätzlich dazu eine Kastendichtung mit mindestens einer Dichtlippe aufweist. Diese Dichtlippe der Kastendichtung ist innenseitig an einer Slide-Out-Aussparung angeordnet und liegt permanent außenseitig an einem Slide-Out-Kasten an.

Die Kastendichtung stellt eine im eingefahrenen und im ausgefahrenen Zustand des Slide-Out-Kastens wirkende Dichtung dar. Aufgrund der erfindungsgemäßen Ausgestaltung des Antriebssystems mit einem sich selbst stabilisierenden Doppelkettensatz kann auf jegliche Elemente des Antriebssystems an den Seitenwandungen des Slide-Out-Kastens verzichtet werden. Dies gestattet es, mit einer umlaufenden Dichtlippe der Kastendichtung eine sehr gute Abdichtungswirkung zu erzielen. Durchführungen von an der Seitenwandung vorgesehenen Zahnstangen oder dergleichen, die aus dem Stand der Technik bekannt sind und die Schwachstellen bei der Abdichtung darstellen, sind bei einer erfindungsgemäßen Slide-Out-Anordnung nicht vorgesehen. Die Dichtlippe der Kastendichtung ist daher vorzugsweise an der Oberwandung, der Unterwandung und der Seitenwandung jeweils mit einheitlich geradlinigem Dichtlippenabschnitt ausgebildet.

Zumindest der mindestens eine Doppelkettensatz des Antriebssystems ist in seiner ausgefahrenen Stellung vorzugsweise in einem Bereich angeordnet, der durch die mindestens eine Dichtlippe der Kastendichtung gegenüber einer Außenumgebung isoliert ist. Hierdurch wird wirksam verhindert, dass Feuchtigkeit von außen in den Bereich der Doppelkettensätze gelangt.

Die Erfindung betrifft zum einen die beschriebene Slide-Out-Anordnung im nicht montierten Zustand, also insbesondere die einen Beschlagsatz bildenden Einzelkomponenten, die zur Anbringung in der beschriebenen Weise ausgebildet sind.

Die Erfindung betrifft jedoch weiterhin auch die beschriebene Slide-Out-Anordnung im montierten Zustand, also im in ein Fahrzeug integrierten Zustand.

Darüber hinaus betrifft die Erfindung auch das Fahrzeug als Ganzes, welches mit einer Slide-Out-Anordnung der beschriebenen Art ausgerüstet ist. Ein solches Fahrzeug, welches insbesondere als Wohnmobil oder Caravan-Anhänger ausgebildet sein kann, verfügt über einen Innenraum sowie über eine Slide-Out-Anordnung mit einem Slide-Out-Kasten, der verlagerbar ist zwischen einer Stau-Endlage, in der eine Außenseite des Slide-Out-Kastens im Wesentlichen mit der umgebenden Seitenwandung fluchtet, und einer Nutz-Endlage, in der der Slide-Out-Kasten zur Vergrößerung des Innenraums nach außen ausgefahren ist. Für die Anbringung des Slide-Out-Kastens im Fahrzeugsowie dessen Verlagerung ist die erfindungsgemäße Slide-Out-Anordnung integriert.

Besonders üblich ist die Anordnung des Slide-Out-Kastens und der zur Aufnahme des Slide-Out-Kastens vorgesehenen Slide-Out-Aussparung in einer Seitenfläche des Fahrzeugs, so dass die Ausfahrrichtung und Einfahrrichtung des Slide-Out-Kastens parallel zu einer Fahrzeugquerrichtung erfolgt. Auch möglich ist eine Gestaltung mit einem im Dachbereich des Fahrzeugs vorgesehenen Slide-Out-Aussparung, durch die hindurch der Slide-Out-Kasten vertikal ausgefahren werden kann.

Eine besondere Bauweise sieht vor, dass die Slide-Out-Anordnung in einem Heckbereich des Fahrzeugs vorgesehen, so dass der Slide-Out-Kasten in Fahrzeuglängsrichtung verfahrbar ist. In einem solchen Falle ist vorzugsweise vorgesehen, dass die Seitenwandungen des Slide-Out-Kastens nicht parallel ausgerichtet sind, sondern sich der Slide-Out-Kasten nach oben hin verjüngt.

Die Verwendung des Slide-Out-Kastens kann auf verschiedene Weisen erfolgen. Handelt es sich bei dem Fahrzeug um ein Nutzfahrzeug zum Transport von Gütern, so kann der Slide-Out-Kasten ohne Inneneinbauten vorgesehen sein, so dass er beispielsweise der Aufnahme von Transportgütern dient. Ein solcher Slide-Out-Kasten ist vorzugsweise ausreichend fest geführt, dass er auch bei der Fahrt des Fahrzeugs in seiner Stau-Endlage verbleiben kann.

Ist das Fahrzeug als Reisemobil oder Caravananhänger ausgebildet, so ist es von besonderem Vorteil, wenn der Slide-Out-Kasten mit Inneneinbauten gestaltet ist. Insbesondere kann eine Möblierung integriert sein, vorzugsweise umfassend ein Sitzmöbelstück und/oder ein Tisch. Auch möglich ist eine Gestaltung, bei der eine Küche oder Küchen-Gerätschaften in den Slide-Out-Kasten fest integriert sind.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A bis 3C zeigen verschiedene Fahrzeuge mit einer Slide-Out-Anordnung.
Fig. 4 bis 7 zeigen eine exemplarische Slide-Anordnung und Details hiervon.
Fig. 8A und 8B verdeutlichen die Verlagerung des Slide-Out-Kastens der Slide-Out-Anordnung sowie die dabei hergestellte Abdichtung.
Fig. 9 bis 11C zeigen in schematischer Form die Anordnung und Kopplung von Doppelkettensätzen zur Verlagerung eines Slide-Out-Kastens der Slide-Out-Anordnung.

### DETAILLIERTE BESCHREIBUNG DER AUSFÜHRUNGSBEISPIELE

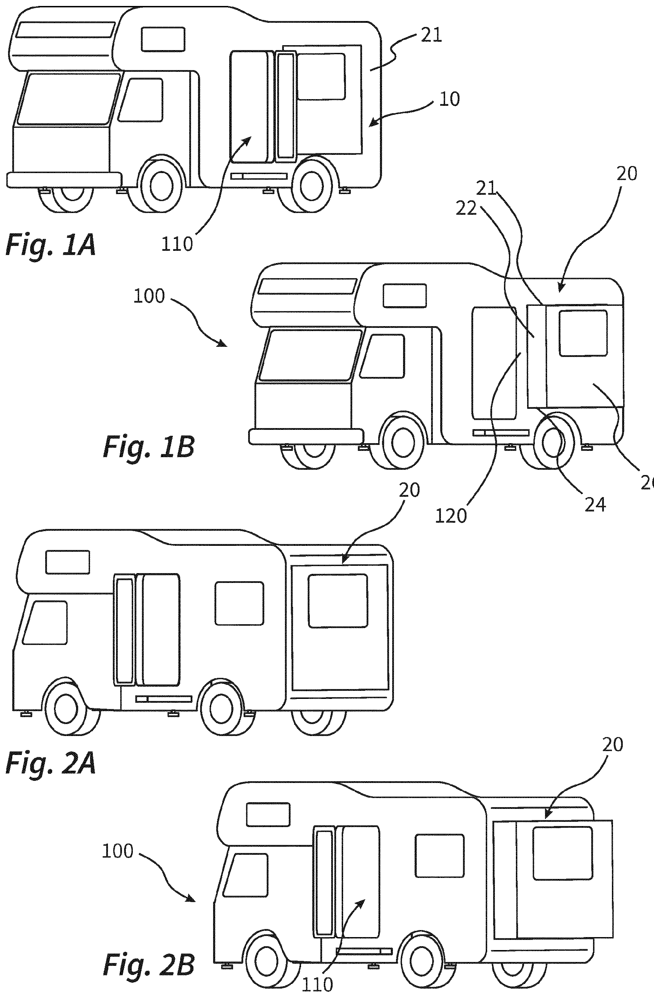

Die Fig. 1A und 1B zeigen ein Fahrzeug 100 in Form eines Reisemobils. Dieses Fahrzeug 100 ist mit einer Slide-Out-Anordnung 10 versehen, die zur Bewegung eines Slide-Out-Kastens 20 vorgesehen ist, der zwischen einer eingefahrenen Stellung (Fig. 1A) und einer ausgefahrenen Stellung (Fig. 1B) verlagerbar ist.

Der Slide-Out-Kasten 20 seinerseits weist eine Außenseite 26 auf, die im eingefahrenen Zustand der Fig. 1A im Wesentlichen fluchtend mit einer Seitenwandung 120 des Fahrzeugs ausgerichtet ist. In diesem Zustand der Fig. 1A ist das Bewegen des Fahrzeugs möglich.

Wie der ausgefahrene Zustand der Fig. 1B zeigt, weist der Slide-Out-Kasten 20 neben der Außenseite 26 auch zwei Seitenwandungen 22, 23 und eine die Decke bildende Oberwandung 21 sowie eine den Boden bildende Unterwandung 24 auf. Fig. 1B zeigt den ausgefahrenen Zustand, der bei stationärem Betrieb des Fahrzeugs 100 genutzt wird und durch den der Fahrzeuginnenraum 110 des Fahrzeugs vergrößert wird.

Während die Verlagerung des Slide-Out-Kastens 20 beim Ausführungsbeispiel der Fig. 1A und 1B in Fahrzeugquerrichtung, also zur Seite des Fahrzeugs, erfolgt, ist bei der Gestaltung der Fig. 2A und 2B eine heckseitige Anordnung des Slide-Out-Kastens 20 vorgesehen. Hier ist der Slide-Out-Kasten dementsprechend in Fahrzeuglängsrichtung verfahrbar.

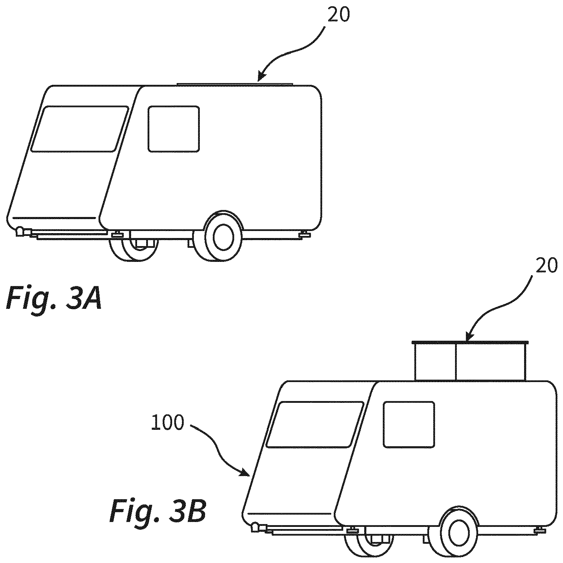

Bei der Gestaltung der Fig. 3A und 3B ist das exemplarisch gewählte Fahrzeug 100 kein Reisemobil, sondern ein Caravan-Anhänger. Auch dieser weist einen Slide-Out-Kasten 20 auf, wobei dieser in Fahrzeughochrichtung verfahrbar ist, beispielsweise um oberhalb eines weit oben im Fahrzeug 100 angeordneten Bettes den verfügbaren Bewegungsraum zu vergrößern.

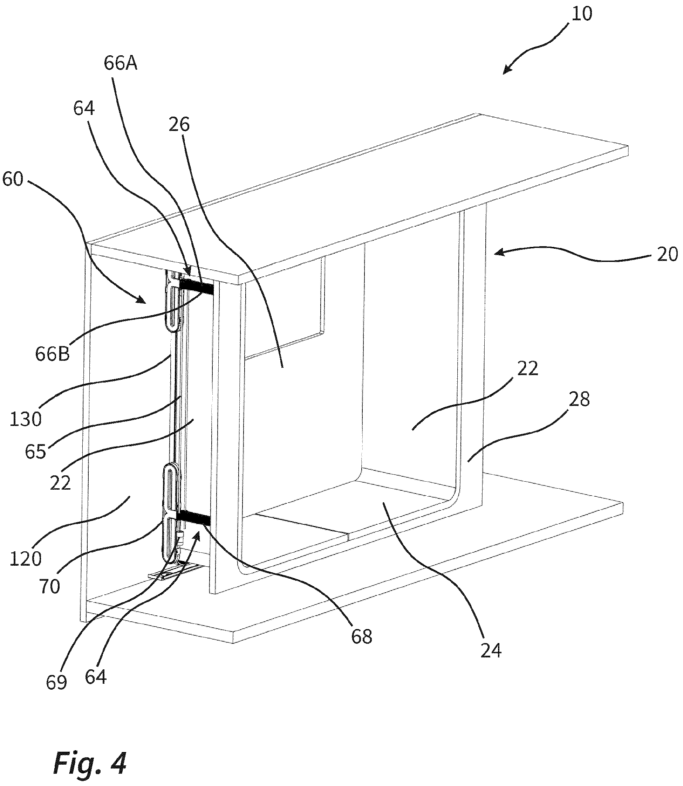

Die Fig. 4 bis 7 zeigen eine konkrete Slide-Out-Anordnung 10, die in den genannten Fällen in dieser oder betreffend die Ausrichtung angepasster Form verwendet werden kann.

Aus Fig. 4 ist ersichtlich, dass der Slide-Out-Kasten 20 in einer Slide-Out-Aussparung 130 in einer Seitenwandung 120 des Fahrzeugs 100 eingesetzt ist. In nicht näher dargestellter Weise ist eine Führung realisiert, die insbesondere mittels fahrzeugseitig angebrachter Rollen gestaltet ist, die an der Unterwandung 24 und der Oberwandung 21 des Slide-Out-Kastens 20 entlangrollen.

Die Slide-Out-Anordnung 10 verfügt darüber hinaus über ein Antriebssystem 60, um den Slide-Out-Kasten 20 aus der eingefahrenen Endlage, die in Fig. 4 dargestellt ist, in eine ausgefahrene Endlage entsprechend der Fig. 1B, 2B oder 3B zu überführen. Dieses Antriebssystem 60 wirkt zwischen einer fahrzeugfesten Baugruppe 40 und einer am Slide-Out-Kasten 20 vorgesehenen Baugruppe 50.

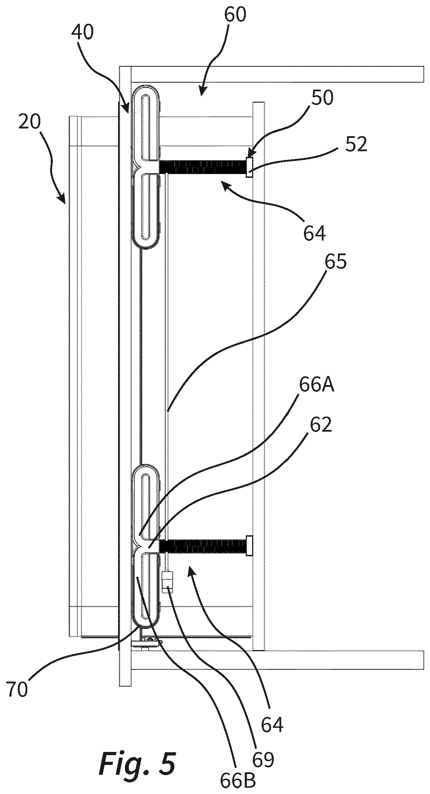

Bezugnehmend insbesondere auf Fig. 5 sowie 6 und 7 wird dieses Antriebssystem 60 erläutert. Das Antriebssystem 60 weist auf beiden Seiten des Slide-Out-Kastens 20, also im Bereich der Seitenwandungen 22, 23, insgesamt vier Doppelkettensätze 64 auf, jeweils zwei Doppelkettensätze 64 auf jeder Seite. Ein jeder Doppelkettensatz 64 verfügt über einen Kettenspeicher 70, der in nicht näher dargestellter Art und Weise an der chassisseitigen Baugruppe 40 befestigt ist und in dem jeweils ein Kettenstrang 66A, 66B zumindest teilweise gelagert ist, soweit die Kettenstränge 66A, 66B nicht bereits ausgefahren sind. Die Kettenstränge 66A, 66B werden beim Ausfahren aus unterschiedlichen Richtungen jeweils einem Kontaktbereich 62 zugeführt, wo die Kettenglieder der jeweiligen Kettenstränge 66A, 66B in unmittelbarem Kontakt miteinander gelangen. Beide Kettenstränge 66A, 66B sind nur für unidirektionales Knickverhalten ausgelegt. Bezugnehmend auf den unteren Doppelkettensatz 64 in Fig. 5 ist somit vorgesehen, dass der obere Kettenstrang 66A bezogen auf eine Ausfahrrichtung des Kettenstrangs 66A nur gegen den Uhrzeigersinn knickbeweglich ist, während der untere Kettenstrang 66B nur im Uhrzeigersinn knickbeweglich ist. Im Zuge des Ausfahrens der Kettenstränge 66A, 66B werden die Kettenglieder beider Kettenstränge 66A, 66B im Kontaktbereich 62 in formschlüssigen Eingriff miteinander gebracht, so dass jeweils ein Kettenglied des Kettenstrangs 66A und ein Kettenglied des Kettenstrangs 66B miteinander verhakt werden und somit ab dem Kontaktbereich 62 einen Kettenverbund 68 bilden, der zur Übertragung von Druckkräften geeignet ist.

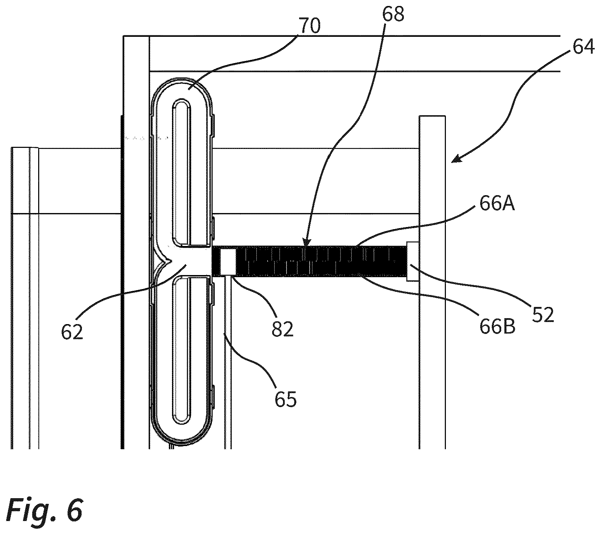

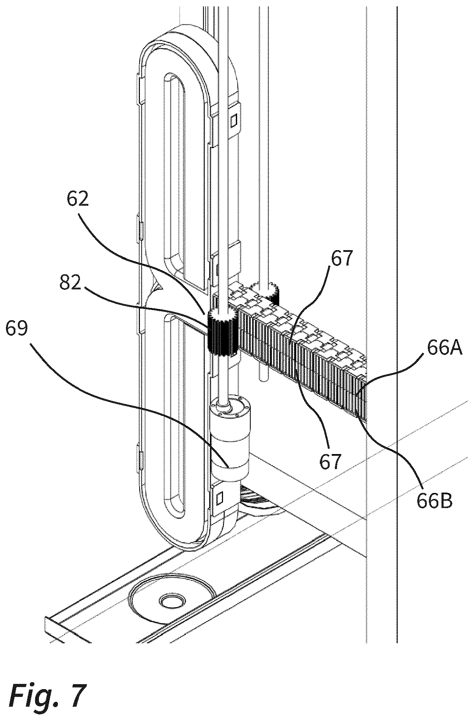

Bezugnehmend auf Fig. 6 und 7 ist somit rechts neben dem Kontaktbereich 62 auf den Kettensträngen 66A, 66B ein gemeinsamer Kettenverbund geworden, der gemeinsam ausgefahren wird und bei dem sich die beiden Kettenstränge 66A, 66B gegenseitig führen. Das distale Ende des Kettenverbundes 68 ist an einer Blende 28 des Slide-Out-Kastens angebracht, wobei der entsprechende Befestigungsbeschlag 52 einen Teil der slide-out-seitigen Baugruppe 50 darstellt.

Zum Antreiben der Kettenstränge 66A, 66B der beiden in Fig. 5 dargestellten Doppelkettensätze 64 istein gemeinsamer Motor 69 vorgesehen, der mittels zweier Antriebselemente 82 in Form von Zahnrädern die Kettenstränge 66A, 66B ausfahren kann. Zu diesem Zweck sind seitlich an den Kettensträngen 66A, 66B in der insbesondere aus Fig. 7 ersichtlichen Weise Verzahnungen 67 vorgesehen. Wird ausgehend von dem Zustand der Fig. 5 bis 7, die einen weitgehend eingefahrenen Zustand des Slide-Out-Kastens 20 darstellen, der Elektromotor 69 aktiviert, so verlagert er je nach Drehrichtung die Kettenstränge 66A, 66B gemeinsam unter Auftrennung der Kettenstränge 66A, 66B in den Kettenspeicher 70 hinein oder aus dem Kettenspeicher 70 hinaus unter Zusammenführung der Kettenstränge 66A, 66B im Kontaktbereich 62. Hierbei wird dementsprechend auch der die Position des Slide-Out-Kastens 20 bestimmende Kettenverbund 68 jenseits des Kontaktbereichs 62 bezüglich seiner Länge vergrößert oder verkleinert.

Werden mittels des Motors 69 die Kettenstränge 66A, 66B aus den Kettenspeichern 70 herausgezogen, so wird die Länge des Kettenverbundes 68 vergrößert und der Slide-Out-Kasten 20 fährt ein. Werden mittels des Motors 69 die Kettenstränge 66A, 66B in die Kettenspeicher hineingedrückt, so wird der jeweilige Kettenverbund 68 beim Durchfahren des Kontaktbereichs 62 aufgelöst und die hierbei getrennten Kettenglieder der beiden Kettenstränge 66A, 66B fahren in ihren jeweiligen Bereich des Kettenspeichers 70 ein. Der ausgefahrene Kettenverbund 68 verkürzt sich und der Slide-Out-Kasten 20 fährt heraus in Richtung der ausgefahrenen Endlage.

Auf diese Art und Weise kann mittels der im vorliegenden Beispiel vier Doppelkettensätze 64 der Slide-Out-Kasten 20 in der gewünschten Art und Weise verlagert werden.

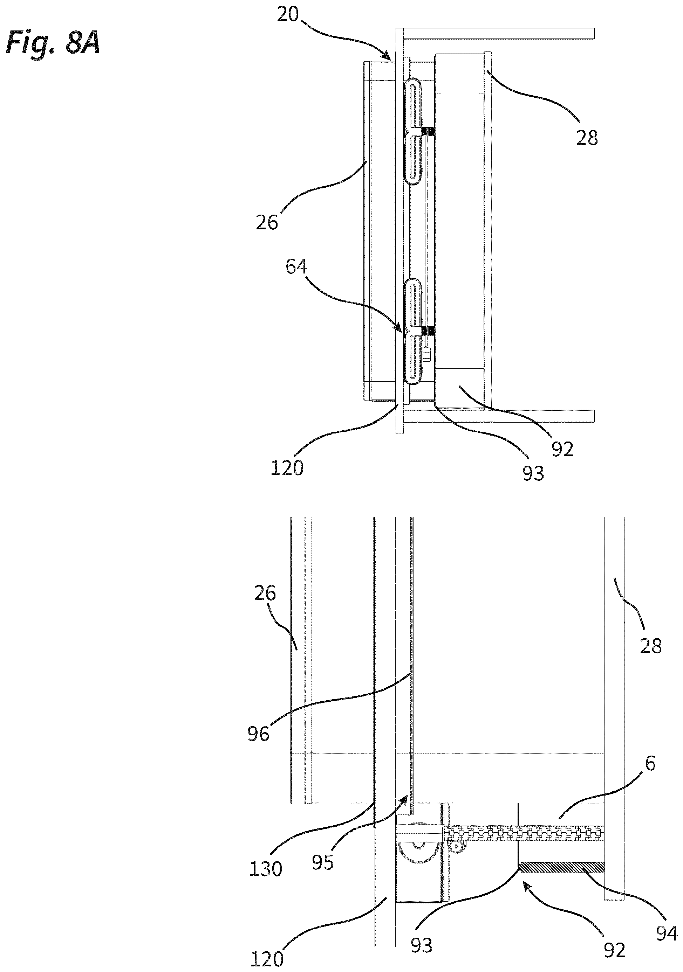

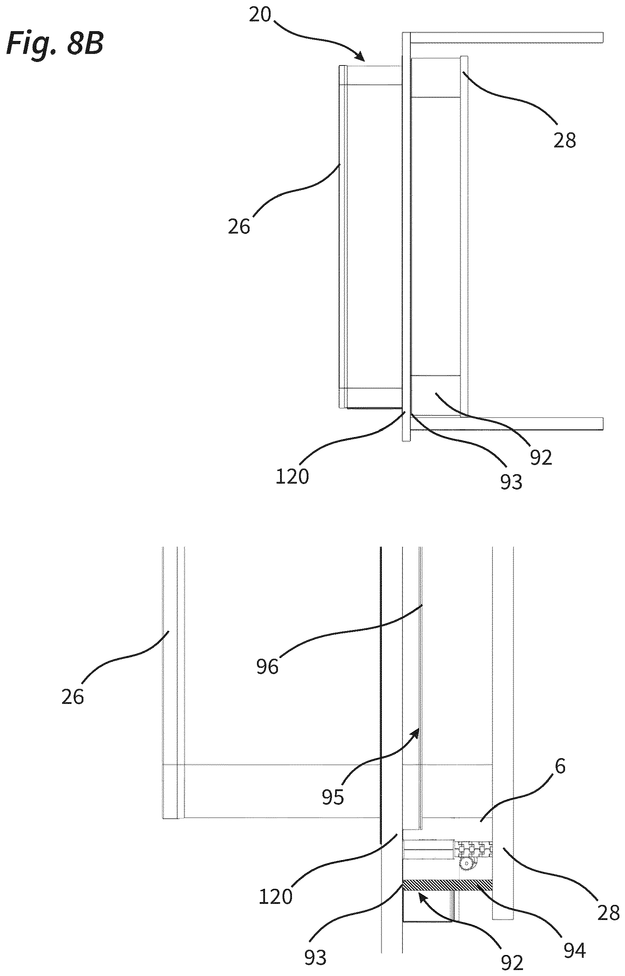

Bezugnehmend auf die Fig. 8A und 8B wird die Abdichtung der Slide-Out-Anordnung 10 verdeutlicht, wobei Fig. 8A einen teileingefahrenen und Fig. 8B einen ausgefahrenen Zustand darstellt.

In Fig. 8A und 8B ist jeweils oben eine Seitenansicht der vollständigen Slide-Out-Anordnung 10 gezeigt. Jeweils unten in den Fig. 8A und 8B ist eine Draufsicht auf eine Seite der Slide-Out-Anordnung 10 dargestellt. Die im weiteren noch beschriebene Endlagendichtung ist der Draufsicht zum erleichterten Verständnis geschnitten dargestellt.

Als Teil der Slide-Out-Anordnung 10 sind zwei Dichtungsteilsysteme vorgesehen, nämlich eine Endlagendichtung 92 sowie eine Kastendichtung 95.

Die Kastendichtung 95 besteht aus einer oder mehrerer Dichtlippen 96, die von außen in die Slide-Out-Aussparung 130 der Seitenwandung 120 hineinragen, wobei sie außenseitig am Slide-Out-Kasten 20 anliegen, genauer an dessen Seitenwandung22, 23 sowie dessen Unterwandung 24 und Oberwandung 21. Da an der Außenfläche der entsprechenden Wandungen 21, 22, 23, 24 keinerlei mechanische Elemente des Antriebssystems 60 vorgesehen sind, ist diese Kastendichtung 95 mit ihrer mindestens einen Dichtlippe 96 eine sehr wirksame Dichtungseinrichtung. Das Eintreten von Flüssigkeit in das Fahrzeug 100 durch die Slide-Out-Aussparung 130 ist dadurch komplett unterbunden oder auf ein Minimum reduziert. Die Kastendichtung 95 ist im Regelbetrieb stets im Eingriff. Ungeachtet der Frage, ob sich der Slide-Out-Kasten 20 in seiner ausgefahrenen Stellung, in seiner eingefahrenen Stellung oder in einer Zwischenstellung befindet, liegt die Dichtlippe 96 der Kastendichtung 95 permanent an der Außenfläche der betreffenden Wandungen 21, 22, 23, 24 an. Allerdings kann ein Wartungsmodus vorgesehen sein, in dem der Slide-Out-Kasten 20 derart verfahren wird, dass der Kontakt zur Kastendichtung 94 verloren geht. Dies dient insbesondere dem Austausch der Kastendichtung 95.

Zusätzlich zur Kastendichtung 95 ist die Endlagendichtung 92 vorgesehen. Diese umfasst eine Dichtlippe 93, die an einem Steg 94 der Blende 28 des Slide-Out-Kastens 20 angebracht ist. Die Dichtlippe 93 weist in Richtung der Innenseite der Seitenwandung 120 des Fahrzeugs. In dem Zustand der Fig. 8A, in dem der Slide-Out-Kasten 20 nur ein Stück weit ausgefahren ist, ist diese Dichtlippe 96 noch nicht in Kontakt mit einer Gegenfläche.

Wenn der Slide-Out-Kasten 20 in der in Fig. 8B gezeigten Weise vollständig ausgefahren ist, liegt die Dichtlippe 96 jedoch innenseitig an der Seitenwandung 120 des Fahrzeugs an und bildet dadurch eine umlaufende Dichtung, die das Eintreten kalter Luft und somit den Wärmeverlust im Fahrzeug 100 wirksam verhindert. Darüber hinaus ist in der aus Fig. 8B ersichtlichen Weise die Anordnung der Doppelkettensätze 64 derart vorgesehen, dass diese in einem Zwischenbereich 6 angeordnet sind, der bei ausgefahrenem Slide-Out-Kasten 20 (Fig. 8B) durch den umlaufenden Steg 94 und die Blende 28 vollständig gegenüber dem Innenraum isoliert ist. Die mechanischen Komponenten des Antriebssystems 60 sind somit bei ausgefahrenem Slide-Out-Kasten aus dem Fahrzeuginnenraum 110 heraus nicht erkennbar.

Die Verwendung von Doppelkettensätzen 64 der beschriebenen Art ermöglicht es somit, eine ideale Abdichtung des Fahrzeuginnenraums 110 trotz der Slide-Out-Anordnung 10 zu erreichen. Darüber hinaus stellt die Verwendung der Doppelkettensätze 64, insbesondere der im Ausführungsbeispiel verwendeten vier Doppelkettensätze, eine bezüglich der Gesamtmasse vorteilhafte Lösung für ein Antriebssystem 60 dar.

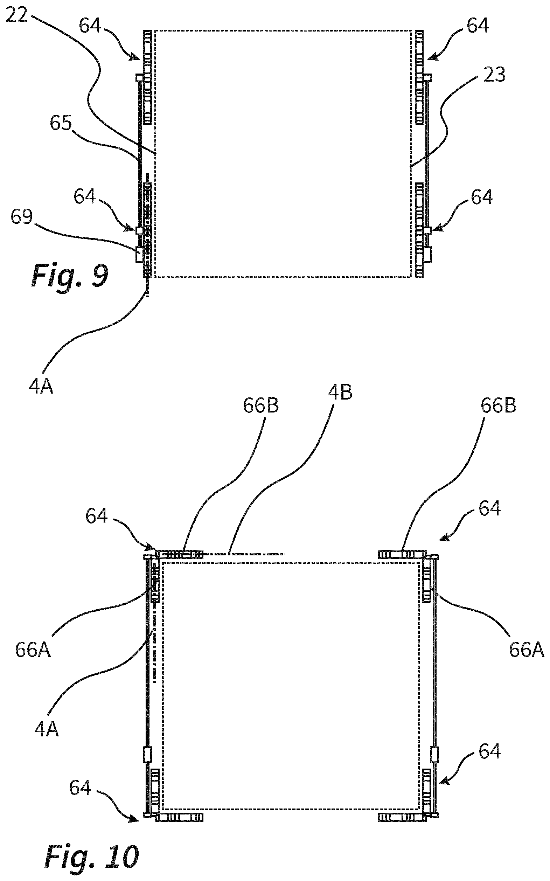

Fig. 9 zeigt nochmals in schematischer Ansicht die Anordnung der Doppelkettensätze bei dem Ausführungsbeispiel der Fig. 4 bis 8D. Es ist erkennbar, dass vier Doppelkettensätze 64 Verwendung finden, wobei jeweils zwei Doppelkettensätze durch einen gemeinsamen Elektromotor 69 angetrieben werden, der zu diesem Zweck an seiner Abtriebswelle zwei Antriebselemente 82 in Form von Zahnrädern aufweist, die über eine Verbindungswelle 65 drehstarr gekoppelt sind. Die Doppelkettensätze 64 weisen jeweils zwei Kettenstränge 66A, 66B, deren Kettenebene 4A identisch ist.

Fig. 10 zeigt eine alternative Gestaltung. Hier ist ein jeder Doppelkettensatz 64 derart ausgebildet, dass die Kettenglieder der Kettenstränge 66A, 66B nicht in einer einheitlichen Kettenebene entsprechend der Kettenebene 4A in Fig. 9 zugeführt werden, sondern die jeweiligen Kettenstränge zweier zusammengehöriger Kettenstränge 66A, 66B in unterschiedlichen Kettenebenen 4A, 4B zugeführt werden und ihre jeweilige Knickbeweglichkeit aufweisen. Die Kettenglieder der Kettenstränge 66A, 66B sind hier dafür ausgebildet, in einer entsprechend im 90° angewinkelten Stellung ineinanderzugreifen und sich miteinander zu verhaken, so dass in allen vier Eckbereichen des Slide-Out-Kastens 20 jeweils ein gemeinsamer Kettenverbund 68 ausfahrbar bzw. einfahrbar ist, um den Slide-Out-Kasten 20 zu verlagern. Was die Motorisierung angeht, so ist beim Ausführungsbeispiel der Fig. 10 gewählt, dass ebenfalls zwei Elektromotoren 69 vorgesehen sind, die über ihre Abtriebswellen die Antriebselemente 82 in Form von Zahnrädern antreiben, welche wiederum mit einem der Kettenglieder von nur einem der Kettenstränge 66A, 66B im Eingriff stehen. Da die Kettenstränge 66A, 66B zu jedem Zeitpunkt zumindest in ihren distalen Kettengliedern miteinander formschlüssig verhakt sind, reicht der Antrieb nur eines Kettenstrangs 66A, um hierdurch mittelbar auch den zweiten Kettenstrang 66B zu verlagern.

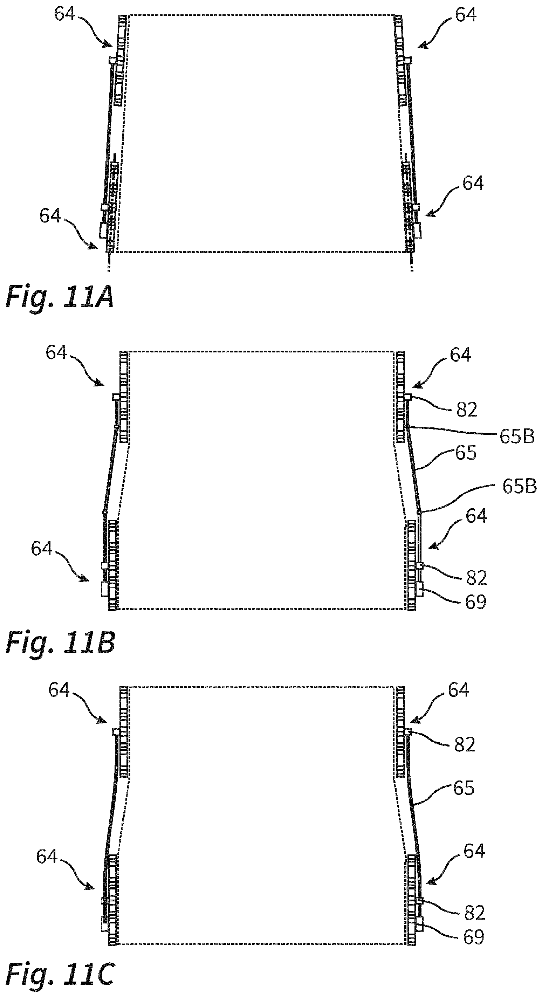

Die Fig. 11A bis 11C zeigen besondere Gestaltungen, bei denen Slide-Out-Kästen 20 Verwendung finden, deren gegenüberliegenden Seitenwandungen 22, 23 nicht parallel sind. Eine derartige Einbausituation ergibt sich insbesondere, wenn in Fahrzeuge, die eine nach oben sich verjüngende Formgebung aufweisen, heckseitig eine Slide-Out-Anordnung 10 integriert wird. Was die Anordnung der Doppelkettensätze 64 und den jeweiligen Antrieb angeht, so ergeben sich hier verschiedene Möglichkeiten.

Im Falle der Fig. 11A ist vorgesehen, dass pro Seite ebenfalls jeweils zwei Doppelkettensätze 64 vorgesehen sind, wobei diese entsprechend der Ausrichtung der Seitenwandungen 22, 23 leicht schräggestellt eingebaut sind. In ähnlicher Weise wie in Fig. 9 verdeutlicht, bleibt hier die Möglichkeit bestehen, den pro Seite einen Elektromotor 69 über eine Verbindungswelle 65 mit beiden Antriebselementen 82 zu verbinden. Der bauliche Unterschied zur Gestaltung gemäß Fig. 9 ist somit begrenzt.

In den Fig. 11B und 11C sind dagegen Gestaltungen gezeigt, bei denen die im Bereich der Seitenwandungen 22, 23 jeweils vorgesehenen zwei Doppelkettensätze 64 gegeneinander versetzt sind, so dass die jeweiligen Kettenebenen zwar parallel erstreckt sind, jedoch nicht identisch sind. Um auch hier mittels nur eines Motors 69 jeweils zwei Doppelkettensätze 64 antreiben zu können, ist in Fig. 11B eine Variante gezeigt, bei der die hierfür vorgesehene Verbindungswelle 65 über zwei Kardangelenke 65B an die jeweiligen Antriebswellen der Antriebselemente 82 angekoppelt sind. Mittels der Motoren 69 können somit trotz des seitlichen Versatzes beide Doppelkettensätze 64 gemeinsam ausgefahren werden. Bei der Gestaltung gemäß Fig. 11C ist dagegen eine in sich biegbare Verbindungswelle 65 vorgesehen, an der unmittelbar die Antriebselemente 82 angebracht sind.

## Patentansprüche

1. Slide-Out-Anordnung (10) für ein Fahrzeug (100) mit den folgenden Merkmalen:
a. die Slide-Out-Anordnung (10) umfasst eine fahrzeugseitige Baugruppe (40) zur Anbringung am Chassis des Fahrzeugs, und
b. die Slide-Out-Anordnung (10) umfasst eine slide-out-seitige Baugruppe (50) zur Anbringung an einem Slide-Out-Kasten (20), und
c. die Slide-Out-Anordnung (10) umfasst ein Antriebssystem (60), mittels dessen die fahrzeugseitige Baugruppe (40) und die slide-out-seitige Baugruppe (50) gegeneinander verfahrbar sind,
**gekennzeichnet durch** die folgenden zusätzlichen Merkmale:
d. das Antriebssystem (60) umfasst einen Schubkettenantrieb mit mindestens einem Doppelkettensatz (64), und
e. der Doppelkettensatz (64) verfügt über mindestens zwei unabhängig voneinander beim Ausfahren des Doppelkettensatzes zu einem Kontaktbereich zugeführten Kettenstränge (66A, 66B), und
f. die mindestens zwei Kettenstränge (66A, 66B) gelangen beim Ausfahren der Kettenstränge (66A, 66B) im Kontaktbereich (62) derart in Kontakt miteinander, dass sie sich gegenseitig stützend oder haltend als gemeinsamer Kettenverbund (68) ausfahrbar sind.

2. Slide-Out-Anordnung (10) nach Anspruch 1 mit dem folgenden weiteren Merkmal:
a. die mindestens zwei Kettenstränge (66A, 66B) sind jeweils als unidirektional knickbewegliche Kettenstränge (66A, 66B) ausgebildet.

3. Slide-Out-Anordnung (10) nach Anspruch 1 oder 2 mit dem folgenden weiteren Merkmal:
a. die beiden Kettenstränge (66A, 66B) sind dafür ausgebildet, im Kontaktbereich (62) eine formschlüssige Kopplung miteinander einzugehen.

4. Slide-Out-Anordnung (10) nach einem der vorstehenden Ansprüche mit dem folgenden weiteren Merkmal:
a. die Slide-Out-Anordnung (10) umfasst einen Slide-Out-Kasten (20), der an die die slide-out-seitige Baugruppe (50) angebracht ist, wobei der Slide-Out-Kasten (20) zumindest eine formstabile Außenseite (26) sowie vorzugsweise darüber hinaus formstabile oder formflexible Seitenwandungen (22, 23) und/oder formstabile oder formflexible Ober- und Unterwandungen (21, 24) aufweist.

5. Slide-Out-Anordnung (10) nach Anspruch 4 mit dem folgenden weiteren Merkmal:
a. der Slide-Out-Kasten (20) weist eine sich nach oben verjüngende Formgebung mit nichtparallelen Seitenwandungen (22, 23) auf.

6. Slide-Out-Anordnung (10) nach einem der vorstehenden Ansprüche mit dem folgenden weiteren Merkmal:
a. das Antriebssystem (60) ist derart an die slide-out-seitige Baugruppe (50) und die fahrzeugseitige Baugruppe (40) gekoppelt, dass durch Ausfahren des Doppelkettensatzes (64) eine Außenseite (26) des Slide-Out eingefahren wird und durch Einfahren des Doppelkettensatzes (64) die Außenseite (26) des Slide-Out ausgefahren wird.

7. Slide-Out-Anordnung (10) nach einem der vorstehenden Ansprüche mit dem folgenden weiteren Merkmal:
a. die mindestens zwei Kettenstränge (66A, 66B) werden in unterschiedlichen Kettenebenen (4A, 4B) zugeführt,
vorzugsweise mit dem folgenden zusätzlichen Merkmal:
b. die mindestens zwei Kettenstränge (66A, 66B) werden in nicht-parallelen Kettenebenen (4A, 4B) zugeführt, die miteinander vorzugsweise einen Winkel zwischen 60° und 120° einschließen, insbesondere vorzugsweise einen Winkel von 90°.

8. Slide-Out-Anordnung (10) nach einem der vorstehenden Ansprüche mit dem folgenden weiteren Merkmal:
a. das Antriebssystem (60) ist derart ausgebildet, dass die Kettenstränge (66A, 66B) in einem eingefahrenen Zustand des Doppelkettensatzes (64) in einem Kettenspeicher (70) angeordnet sind, der Teil der fahrzeugseitigen Baugruppe (40) ist.

9. Slide-Out-Anordnung (10) nach einem der vorstehenden Ansprüche mit den folgenden weiteren Merkmalen:
a. der Schubkettenantrieb verfügt über zwei Doppelkettensätzen (64), die auf der gleichen Seite des Slide-Outs vorgesehen sind, und
b. die beiden Doppelkettensätze (64) sind miteinander mechanisch synchronisiert,
vorzugsweise mit den folgenden zusätzlichen Merkmalen:
c. der Schubkettenantrieb verfügt über vier Doppelkettensätze (64), von denen jeweils zwei auf der gleichen Seite des Slide-Outs vorgesehen sind und dort einen oberen und einen unteren Doppelkettensatz (64) bilden, und
d. die beiden Doppelkettensätze (64) einer jeden Seite sind miteinander mechanisch synchronisiert, wobei vorzugweise der Abstand zwischen den oberen Doppelkettensätzen (64) geringer ist als zwischen den unteren Doppelkettensätzen (64).

10. Slide-Out-Anordnung (10) nach einem der vorstehenden Ansprüche mit den folgenden weiteren Merkmalen:
a. im Kontaktbereich (62) werden die beiden Kettenstränge (66A, 66B) beim Ausfahren des Doppelkettensatzes (64) zusammengeführt, wobei sie hierfür aus unterschiedlichen Richtungen zugeführt werden, und
b. mindestens einer der Kettenstränge (66A, 66B) weist eine Verzahnung (67) auf einer Seitenfläche auf, die zur Kettenebene (4A) des Kettenstrangs (66A, 66B) parallel ausgerichtet ist.
c. es ist eine Antriebseinheit mit einem Antriebselement (82), insbesondere einem Zahnrad oder einer Schnecke, vorgesehen, das mit Verzahnung (67) des mindestens einen Kettenstrangs (66A, 66B) im Eingriff steht,
vorzugsweise mit dem folgenden zusätzlichen Merkmal:
d. beide Kettenstränge (66A, 66B) weisen eine Verzahnung (67) auf einer Seitenfläche auf, die zur Kettenebene des Kettenstrangs (66A, 66B) parallel ausgerichtet ist, wobei das Antriebselement (82) oder eine Mehrzahl von Antriebselementen mit der Verzahnung (67) im Eingriff steht.

11. Slide-Out-Anordnung (10) nach einem der vorstehenden Ansprüche mit den folgenden weiteren Merkmalen:
a. es ist eine Endlagendichtung (92) mit einer Dichtlippe (93) vorgesehen, und
b. die Dichtlippe (93) der Endlagendichtung (92) ist ausgerichtet, um in einer ausgefahrenen Endlage des Slide-Out-Kastens (20) umlaufend einen Fahrzeuginnenraum (110) gegenüber einer Slide-Out-Aussparung (130) zu isolieren,
vorzugsweise mit dem folgenden zusätzlichen Merkmal:
c. das Antriebssystem (60) ist derart ausgebildet, dass zumindest der mindestens eine Doppelkettensatz (64) in seiner ausgefahrenen Stellung in einem Zwischenbereich (6) angeordnet ist, der durch die Dichtlippe (93) der Endlagendichtung (92) gegenüber dem Fahrzeuginnenraum (110) isoliert ist.

12. Slide-Out-Anordnung (10) nach einem der vorstehenden Ansprüche mit dem folgenden weiteren Merkmal:
a. es ist mindestens eine Kastendichtung (95) mit mindestens einer Dichtlippe (96) vorgesehen, die innenseitig an einer Slide-Out-Aussparung (130) angeordnet ist und die permanent außenseitig an einem Slide-Out-Kasten (20) anliegt,
vorzugsweise mit dem folgenden zusätzlichen Merkmal:
b. die mindestens eine Kastendichtung (95) ist derart angeordnet, dass zumindest der mindestens eine Doppelkettensatz (64) des Antriebssystems (60) in seiner ausgefahrenen Stellung in einem Zwischenbereich (6) angeordnet ist, der durch die mindestens eine Dichtlippe (96) der Kastendichtung (95) gegenüber einer Außenumgebung isoliert ist.

13. Slide-Out-Anordnung (10) nach einem der vorstehenden Ansprüche mit mindestens einem der folgenden weiteren Merkmale:
a. die Slide-Out-Anordnung (10) weist eine Dichteinrichtung (90) auf, die einen Fahrzeuginnenraum (110) von einer Außenumgebung isoliert, wobei mindestens der Doppelkettensatz (64) in jeder Stellung der Slide-Out-Anordnung (10) innerhalb des Fahrzeuginnenraums (110) angeordnet ist, und/oder
b. das Antriebssystem (60) weist mindestens einen Elektromotor (69) oder mindestens einen Hydraulikmotor (69) auf, vorzugsweise zwei Elektromotoren (69) oder zwei Hydraulikmotoren (69), und/oder
c. zwei Doppelkettensätze (64) an einer jeden Seite sind miteinander mechanisch über eine Verbindungswelle (65) synchronisiert, wobei vorzugsweise die Verbindungswelle elastisch biegbar oder eine Verbindungswelle mit einer Ausgleichswellenkupplung vorgesehen ist, mittels derer zwei Antriebswellen der zwei Doppelkettensätzen (64) verbunden sind, und/oder
d. die Slide-Out-Anordnung (10) umfasst eine Führungseinrichtung, entlang derer die fahrzeugseitige Baugruppe (40) und die slide-out-seitige Baugruppe (50) gegeneinander geführt verlagerbar sind.

14. Fahrzeug (100), insbesondere Wohnmobil, mit einer Slide-Out-Anordnung mit den folgenden Merkmalen:
a. das Fahrzeug (100) weist einen Fahrzeuginnenraum (110) auf, und
b. das Fahrzeug (100) weist eine Slide-Out-Anordnung (10) mit einem Slide-Out-Kasten (20) auf, der verlagerbar ist zwischen einer Stau-Endlage, in der eine Außenseite (26) des Slide-Out-Kastens (20) im Wesentlichen mit der umgebenden Seitenwandung (120) fluchtet, und einer Nutz-Endlage, in der der Slide-Out-Kasten (20) zur Vergrößerung des Fahrzeuginnenraum (110) nach außen ausgefahren ist,
**gekennzeichnet durch** das folgende zusätzliche Merkmal:
c. die Slide-Out-Anordnung (10) ist nach einem der vorstehenden Ansprüche ausgebildet.

15. Fahrzeug (100) nach Anspruch 14 mit dem folgenden weiteren Merkmal:
a. die Slide-Out-Anordnung (10) ist in einem Heckbereich des Fahrzeugs (100) vorgesehen, so dass der Slide-Out-Kasten (20) in Fahrzeuglängsrichtung verfahrbar ist.

16. Fahrzeug (100) nach Anspruch 14 oder 15 mit dem folgenden weiteren Merkmal:
a. das Fahrzeug (100) ist als Reisemobil oder Caravananhänger ausgebildet,
vorzugsweise mit mindestens einem der folgenden weiteren Merkmale:
b. im Slide-Out-Kasten (20) ist eine Möblierung vorgesehen, vorzugsweise umfassend ein Sitzmöbelstück und/oder ein Tisch, und/oder
c. im Slide-Out-Kasten (20) ist eine Küche integriert.

## Claims

1. Slide-out assembly (10) for a vehicle (100), having the following features:
a. the slide-out assembly (10) comprises a vehicle-proximal module (40) for attaching to the chassis of the vehicle, and
b. the slide-out assembly (10) comprises a slide-out-proximal module (50) for attaching to a slide-out box (20), and
c. the slide-out assembly (10) comprises a drive system (60) by means of which the vehicle-proximal module (40) and the slide-out-proximal module (50) can be moved relative to one another,
**characterized by** the following additional features:
d. the drive system (60) comprises a thrust chain drive having at least one double chain set (64), and
e. the double chain set (64) possesses at least two chain strands (66A, 66B) which are fed independently of one another to a contact region when the double chain set is deployed, and
f. when the chain strands (66A, 66B) are deployed, the at least two chain strands (66A, 66B) come into mutual contact in the contact region (62) in such a manner that they are deployable so as to mutually support or hold one another as a common chain unit (68).

2. Slide-out assembly (10) according to Claim 1, having the following further feature:
a. the at least two chain strands (66A, 66B) are in each case designed as unidirectionally kinking chain strands (66A, 66B).

3. Slide-out assembly (10) according to Claim 1 or 2, having the following further feature:
a. the two chain strands (66A, 66B) are designed to form a form-fitting coupling with one another in the contact region (62).

4. Slide-out assembly (10) according to one of the preceding claims, having the following further feature:
a. the slide-out assembly (10) comprises a slide-out box (20) which is attached to the slide-out-proximal module (50), wherein the slide-out box (20) has at least one dimensionally stable external side (26) and preferably moreover has dimensionally stable or dimensionally flexible lateral walls (22, 23) and/or dimensionally stable or dimensionally flexible upper and lower walls (21, 24).

5. Slide-out assembly (10) according to Claim 4, having the following further feature:
a. the slide-out box (20) has an upwardly tapered shape with non-parallel lateral walls (22, 23).

6. Slide-out assembly (10) according to one of the preceding claims, having the following further feature:
a. the drive system (60) is coupled to the slide-out-proximal module (50) and the vehicle-proximal module (40) in such a manner that an external side (26) of the slide-out is retracted by deploying the double chain set (64) and the external side (26) of the slide-out is deployed by retracting the double chain set (64).

7. Slide-out assembly (10) according to one of the preceding claims, having the following further feature:
a. the at least two chain strands (66A, 66B) are fed in different chain planes (4A, 4B),
preferably having the following additional feature:
b. the at least two chain strands (66A, 66B) are fed in non-parallel chain planes (4A, 4B), which conjointly preferably include an angle between 60° and 120°, in particular preferably an angle of 90°.

8. Slide-out assembly (10) according to one of the preceding claims, having the following further feature:
a. the drive system (60) is designed in such a manner that the chain strands (66A, 66B) in the retracted state of the double chain set (64) are disposed in a chain accumulator (70) which is part of the vehicle-proximal module (40).

9. Slide-out assembly (10) according to one of the preceding claims, having the following further features:
a. the thrust chain drive has two double chain sets (64) which are provided on the same side of the slide-out, and
b. the two double chain sets (64) are mechanically synchronized with one another, preferably having the following additional features:
c. the thrust chain drive possesses four double chain sets (64), two of which are provided on the same side of the slide-out and thereon form an upper and a lower double chain set (64), and
d. the two double chain sets (64) of each side are mechanically synchronized with one another, wherein the spacing between the upper double chain sets (64) is preferably smaller than between the lower double chain sets (64).

10. Slide-out assembly (10) according to one of the preceding claims, having the following further features:
a. when deploying the double chain set (64), the two chain strands (66A, 66B) are converged in the contact region (62), whereby they are fed from different directions for this purpose, and
b. at least one of the chain strands (66A, 66B) has a toothing (67) on a lateral face which is oriented parallel to the chain plane (4A) of the chain strand (66A, 66B).
c. provided is a drive unit having a drive element (82), in particular a gear or a worm, which engages with the toothing (67) of the at least one chain strand (66A, 66B),
preferably having the following additional feature:
d. both chain strands (66A, 66B) have a toothing (67) on a lateral face which is oriented parallel to the chain plane of the chain strand (66A, 66B), wherein the drive element (82) or a plurality of drive elements engages/engage with the toothing (67).

11. Slide-out assembly (10) according to one of the preceding claims, having the following further features:
a. provided is an end position seal (92) having a sealing lip (93), and
b. the sealing lip (93) of the end position seal (92) is oriented in order to insulate in an encircling manner a vehicle interior (110) in relation to a slide-out recess (130) in a deployed end position of the slide-out box (20),
preferably having the following additional feature:
c. the drive system (60) is designed in such a manner that at least the at least one double chain set (64) in its deployed position is disposed in an intermediate region (6) which is insulated in relation to the vehicle interior (110) by the sealing lip (93) of the end position seal (92).

12. Slide-out assembly (10) according to one of the preceding claims, having the following further feature:
a. provided is at least one box seal (95) having at least one sealing lip (96) which is disposed on the inside on a slide-out recess (130) and which permanently rests externally on a slide-out box (20),
preferably having the following additional feature:
b. the at least one box seal (95) is disposed in such a manner that at least the at least one double chain set (64) of the drive system (60) in its deployed position is disposed in an intermediate region (6) which is insulated in relation to an external environment by the at least one sealing lip (96) of the box seal (95).

13. Slide-out assembly (10) according to one of the preceding claims, having at least one of the following further features:
a. the slide-out assembly (10) has a sealing device (90) which insulates a vehicle interior (110) in relation to an external environment, wherein at least the double chain set (64) in each position of the slide-out assembly (10) is disposed within the vehicle interior (110), and/or
b. the drive system (60) has at least one electric motor (69) or at least one hydraulic motor (69), preferably two electric motors (69) or two hydraulic motors (69), and/or
c. two double chain sets (64) on each side are mechanically synchronized with each other via a connecting shaft (65), wherein the connecting shaft is preferably elastically bendable, or provided is a connecting shaft having a balancer shaft coupling, by means of which two drive shafts of the two double chain sets (64) are connected, and/or
d. the slide-out assembly (10) comprises a guide device along which the vehicle-proximal module (40) and the slide-out-proximal module (50) are mutually displaceable in a guided manner.

14. Vehicle (100), in particular a motorhome, having a slide-out assembly having the following features:
a. the vehicle (100) has a vehicle interior (110), and
b. the vehicle (100) has a slide-out assembly (10) having a slide-out box (20) which is displaceable between a stowage end position in which an external side (26) of the slide-out box (20) is substantially co-aligned with the surrounding lateral wall (120), and a use end position in which the slide-out box (20) is deployed outwards to enlarge the vehicle interior (110), **characterized by** the following additional feature:
c. the slide-out assembly (10) is designed according to any one of the preceding claims.

15. Vehicle (100) according to Claim 14, having the following further feature:
a. the slide-out assembly (10) is provided in a rear region of the vehicle (100) so that the slide-out box (20) is displaceable in the longitudinal direction of the vehicle.

16. Vehicle (100) according to Claim 14 or 15, having the following further feature:
a. the vehicle (100) is designed as a motorhome or caravan trailer,
preferably having at least one of the following additional features:
b. provided in the slide-out box (20) is furniture, preferably comprising a seating furniture set and/or a table, and/or
c. a kitchen is integrated in the slide-out box (20).

## Revendications

1. Agencement (10) à coulissement vers l'extérieur, ou « Slide-Out », pour un véhicule (100), présentant les caractéristiques suivantes :
a. l'agencement (10) à coulissement vers l'extérieur comprend un sous-ensemble (40) côté véhicule, destiné à être fixé au châssis du véhicule, et
b. l'agencement (10) à coulissement vers l'extérieur comprend un sous-ensemble (50) côté partie coulissante, destiné à être fixé à un caisson (20) à coulissement vers l'extérieur, et
c. l'agencement (10) à coulissement vers l'extérieur comprend un système d'entraînement (60) au moyen duquel le sous-ensemble (40) côté véhicule et le sous-ensemble (50) côté partie coulissante sont aptes à être déplacés l'un par rapport à l'autre,
**caractérisé par** les caractéristiques supplémentaires suivantes :
d. le système d'entraînement (60) comprend un entraînement à chaînes de poussée ayant au moins un ensemble (64) à double chaînes, et
e. l'ensemble (64) à double chaînes comprend au moins deux brins de chaîne (66A, 66B) amenés indépendamment l'un de l'autre vers une zone de contact lors de l'extension de l'ensemble à double chaînes, et
f. lesdits au moins deux brins de chaîne (66A, 66B) entrent en contact l'un avec l'autre dans la zone de contact (62) lors du déploiement des brins de chaîne (66A, 66B) de telle sorte qu'ils soient aptes à être déployés en tant qu'ensemble de chaînes commun (68) en se soutenant ou en se maintenant mutuellement.

2. Agencement (10) à coulissement vers l'extérieur selon la revendication 1, présentant la caractéristique supplémentaire suivante :
a. lesdits au moins deux brins de chaîne (66A, 66B) sont chacun conçus sous forme de brins de chaîne (66A, 66B) articulés unidirectionnellement.

3. Agencement (10) à coulissement vers l'extérieur selon la revendication 1 ou la revendication 2, avec la caractéristique supplémentaire suivante :
a. les deux brins de chaîne (66A, 66B) sont conçus de façon à être accouplés par complémentarité de forme dans la zone de contact (62).

4. Agencement (10) à coulissement vers l'extérieur selon l'une des revendications précédentes, présentant la caractéristique supplémentaire suivante :
a. l'agencement (10) à coulissement vers l'extérieur comprend un caisson (20) à coulissement vers l'extérieur, qui est fixé au sous-ensemble (50) côté partie coulissante, le caisson (20) à coulissement vers l'extérieur présentant au moins un côté extérieur (26) dimensionnellement stable ainsi que, de préférence, des parois latérales (22, 23) dimensionnellement stables ou dimensionnellement flexibles et/ou des parois supérieure et inférieure (21, 24) dimensionnellement stables ou dimensionnellement flexibles.

5. Agencement (10) à coulissement vers l'extérieur selon la revendication 4, présentant la caractéristique supplémentaire suivante :
a. le caisson (20) à coulissement vers l'extérieur présente une forme allant en s'amincissant vers le haut avec des parois latérales non parallèles (22, 23).

6. Agencement (10) à coulissement vers l'extérieur selon l'une des revendications précédentes, présentant la caractéristique supplémentaire suivante :
a. le système d'entraînement (60) est relié au sous-ensemble (50) côté partie coulissante et au sous-ensemble (40) côté véhicule de telle sorte que, sous l'effet du déploiement de l'ensemble (64) à double chaînes, un côté extérieur (26) de la partie coulissante soit rétracté et que, sous l'effet de la rétraction de l'ensemble (64) à double chaînes, le côté extérieur (26) de la partie coulissante soit déployé.

7. Agencement (10) à coulissement vers l'extérieur selon l'une des revendications précédentes, présentant la caractéristique supplémentaire suivante :
a. lesdits au moins deux brins de chaîne (66A, 66B) sont amenés dans des plans de chaîne (4A, 4B) différents,
de préférence avec la caractéristique supplémentaire suivante :
b. lesdits au moins deux brins de chaîne (66A, 66B) sont amenés dans des plans de chaîne (4A, 4B) non-parallèles, qui forment entre eux de préférence un angle compris entre 60° et 120°, de préférence notamment un angle de 90°.

8. Agencement (10) à coulissement vers l'extérieur selon l'une des revendications précédentes, présentant la caractéristique supplémentaire suivante :
a. le système d'entraînement (60) est conçu de telle sorte que les brins de chaîne (66A, 66B) soient placés, dans un état rétracté de l'ensemble (64) à double chaînes, dans un accumulateur (70) de chaînes qui fait partie du sous-ensemble (40) côté véhicule.

9. Agencement (10) à coulissement vers l'extérieur selon l'une des revendications précédentes, présentant les caractéristiques supplémentaires suivantes :
a. l'entraînement à chaînes de poussée présente deux ensembles (64) à double chaînes qui sont prévus du même côté de la partie coulissante, et
b. les deux ensembles (64) à double chaînes sont synchronisés mécaniquement l'un avec l'autre,
de préférence avec les caractéristiques supplémentaires suivantes :
c. l'entraînement par chaîne de poussée présente quatre ensembles (64) à double chaînes, dont deux sont prévus de chaque côté de la partie coulissante et forment un ensemble à double chaînes supérieur et un ensemble (64) à double chaînes inférieur, et
d. les deux ensembles (64) à double chaînes de chaque côté sont synchronisés mécaniquement l'un avec l'autre, la distance entre les ensembles (64) à double chaînes supérieurs étant de préférence inférieure à celle entre les ensembles (64) à double chaînes inférieurs.

10. Agencement (10) à coulissement vers l'extérieur selon l'une des revendications précédentes, présentant les caractéristiques supplémentaires suivantes :
a. dans la zone de contact (62), les deux brins de chaîne (66A, 66B) sont réunis lors de l'extension de l'ensemble (64) à double chaînes, étant à cet effet amenés depuis des directions différentes, et
b. au moins un des brins de chaîne (66A, 66B) présente une denture (67) sur une face latérale, qui est orientée parallèlement au plan de chaîne (4A) du brin de chaîne (66A, 66B),
c. il est prévu une unité d'entraînement avec un élément d'entraînement (82), en particulier une roue dentée ou une vis sans fin, qui est en prise avec la denture (67) dudit au moins un brin de chaîne (66A, 66B),
de préférence avec la caractéristique supplémentaire suivante :
d. les deux brins de chaîne (66A, 66B) présentent une denture (67) sur une face latérale qui est orientée parallèlement au plan de la chaîne du brin de chaîne (66A, 66B), l'élément d'entraînement (82) ou une pluralité d'éléments d'entraînement étant en prise avec la denture (67).

11. Agencement (10) à coulissement vers l'extérieur selon l'une des revendications précédentes, présentant les caractéristiques supplémentaires suivantes :
a. il est prévu un joint de fin de course (92) avec une lèvre d'étanchéité (93), et
b. la lèvre d'étanchéité (93) du joint de fin de course (92) est orientée de manière à isoler de manière périphérique un habitacle de véhicule (110) par rapport à un évidement (130) de partie coulissante dans une position finale déployée du caisson (20) à coulissement vers l'extérieur,
de préférence avec la caractéristique supplémentaire suivante :
c. le système d'entraînement (60) est conçu de telle sorte qu'au moins l'ensemble (64) à double chaînes est, dans sa position déployée, agencé dans une zone intermédiaire (6) qui est isolée de l'habitacle du véhicule (110) par la lèvre d'étanchéité (93) du joint de fin de course (92).

12. Agencement (10) à coulissement vers l'extérieur selon l'une des revendications précédentes, présentant la caractéristique supplémentaire suivante :
a. il est prévu au moins un joint (95) de caisson avec au moins une lèvre d'étanchéité (96), qui est agencé à l'intérieur d'un évidement (130) de partie coulissante et qui est en contact permanent avec l'extérieur d'un caisson (20) à coulissement vers l'extérieur,
de préférence avec la caractéristique supplémentaire suivante :
b. ledit au moins un joint (95) de caisson est agencé de telle sorte qu'au moins ledit au moins un ensemble (64) à double chaînes du système d'entraînement (60) est, dans sa position déployée, agencé dans une zone intermédiaire (6) qui est isolée de l'environnement extérieur par ledit au moins un joint à lèvre (96) du joint (95) de caisson.

13. Agencement (10) à coulissement vers l'extérieur selon l'une des revendications précédentes, présentant au moins une des caractéristiques suivantes :
a. l'agencement (10) à coulissement vers l'extérieur comporte un dispositif d'étanchéité (90) qui isole l'habitacle (110) du véhicule de l'environnement extérieur, au moins l'ensemble (64) à double chaînes étant agencé à l'intérieur de l'habitacle (110) du véhicule dans n'importe quelle position de l'agencement (10) à coulissement vers l'extérieur, et/ou
b. le système d'entraînement (60) comprend au moins un moteur électrique (69) ou au moins un moteur hydraulique (69), de préférence deux moteurs électriques (69) ou deux moteurs hydrauliques (69), et/ou
c. deux ensembles (64) à double chaînes de chaque côté sont synchronisés mécaniquement l'un avec l'autre par un arbre de liaison (65), l'arbre de liaison étant de préférence élastiquement flexible ou un arbre de liaison avec un accouplement d'arbre de compensation étant prévu, au moyen duquel deux arbres d'entraînement des deux ensembles (64) à double chaînes sont reliés, et/ou
d. l'agencement (10) à coulissement vers l'extérieur comprend un dispositif de guidage le long duquel le sous-ensemble (40) côté véhicule et le sous-ensemble (50) côté partie coulissante sont aptes à être déplacés l'un par rapport à l'autre en étant guidés.

14. Véhicule (100), en particulier camping-car, avec un agencement à coulissement vers l'extérieur présentant les caractéristiques suivantes :
a. le véhicule (100) présente un habitacle (110), et
b. le véhicule (100) présente un agencement (10) à coulissement vers l'extérieur avec un caisson (20) à coulissement vers l'extérieur qui est apte à être déplacé entre une position de rangement finale, dans laquelle un côté extérieur (26) du caisson (20) à coulissement vers l'extérieur est sensiblement en affleurement avec la paroi latérale environnante (120), et une position finale d'utilisation, dans laquelle le caisson (20) à coulissement vers l'extérieur est déployé vers l'extérieur de façon à agrandir l'habitacle (110) du véhicule,
**caractérisé par** la caractéristique supplémentaire suivante :
c. l'agencement (10) à coulissement vers l'extérieur est conçu selon l'une des revendications précédentes.

15. Véhicule (100) selon la revendication 14, présentant la caractéristique supplémentaire suivante :
a. l'agencement (10) à coulissement vers l'extérieur est prévu dans une zone arrière du véhicule (100), de sorte que le caisson (20) à coulissement vers l'extérieur est apte à être déplacé dans le sens longitudinal du véhicule.

16. Véhicule (100) selon la revendication 14 ou la revendication 15, présentant la caractéristique supplémentaire suivante :
a. le véhicule (100) est conçu sous la forme d'un camping-car ou d'une caravane,
de préférence avec au moins une des caractéristiques supplémentaires suivantes :
b. le caisson (20) à coulissement vers l'extérieur est équipé d'un mobilier, de préférence comprenant un siège et/ou une table, et/ou
c. une cuisine est intégrée dans le caisson (20) à coulissement vers l'extérieur.
